# EUROPEAN PATENT APPLICATION

(11) **EP 3 974 031 A1**
(43) Date of publication of application: **30.03.2022**
(21) Application number: 20198116.4
(22) Date of filing: 24.09.2020
(51) Int. Cl.: A62B 23/02, A41D 13/11, A62B 18/08

(54) **ANTI-BACTERIAL AND/OR ANTI-VIRAL FACE MASK AND METHOD FOR MANUFACTURING AN ANTI-BACTERIAL AND/OR ANTI-VIRAL FACE MASK**

(71) Applicant: Applied Materials, Inc., Santa Clara, CA 95054 (US)
(72) Inventor: Forster, Daniel P., San Jose, 95120 (US); Deppisch, Thomas, 63743 Aschaffenburg (DE); Metz, Axel, 63755 Alzenau (DE)
(74) Representative: Zimmermann & Partner Patentanwälte mbB

(57) **Abstract**

An anti-bacterial and/or anti-viral face mask and a method for manufacturing an anti-bacterial and/or anti-viral face mask are provided. The anti-bacterial and/or anti-viral face mask include a body portion comprising at least one fibrous layer and at least one coating deposited over the at least one fibrous layer. The at least one coating comprises at least one material selected from the group consisting of TiO₂, ZnO, CuO, Mo, Ag, and combinations thereof.

## Description

### TECHNICAL FIELD

Embodiments of the present disclosure relate to an anti-bacterial and/or anti-viral face mask and a method for manufacturing an anti-bacterial and/or anti-viral face mask.

### BACKGROUND ART

Presently the whole world is facing a pandemic and a global crisis caused by a novel virus that was discovered to be the cause of a large and rapidly spreading outbreak of respiratory disease, including potentially fatal pneumonia. The virus has been provisionally designated 2019-nCoV and later given the official name SARS-CoV-2. The disease caused by the virus was officially named Coronavirus Disease 2019 (COVID-19) by the World Health Organization.

With the current COVID-19 outbreak, the need for effective personal protection from COVID-19 and/or any other virus or bacteria has become more important than ever. In this regard, examples of personal protection devices commonly used include face masks.

Face masks find utility in a variety of medical, industrial, and household applications by protecting a wearer's mouth and nose from inhaling dust and other harmful airborne contaminates. The use of face masks is a recommended practice in the healthcare industry to help prevent the spread of diseases. Face masks worn by healthcare providers help reduce infections in patients by filtering the air exhaled from the wearer, thus reducing the number of harmful organisms or other contaminants released into the environment. Additionally, face masks protect the healthcare worker by filtering microorganisms such as bacteria and viruses from the inhaled air.

Although the above-mentioned face masks provide certain personal protection, there is still a need for improved face masks.

### SUMMARY

In light of the above, an anti- bacterial and anti-viral face mask and a method for manufacturing an anti-bacterial and/or anti-viral face mask are provided. Further aspects, advantages, and features of the present disclosure are apparent from the claims, the description, and the accompanying drawings.

According to an aspect of the present disclosure, an anti- bacterial and anti-viral face mask is provided. The anti-bacterial and/or anti-viral face mask includes a body portion comprising at least one fibrous layer and at least one coating deposited over the at least one fibrous layer. The at least one coating comprises at least one material selected from the group consisting of TiO₂, ZnO, CuO, Mo, Ag, and combinations thereof.

According to an additional aspect of the present disclosure, a method for manufacturing an anti-bacterial and/or anti-viral face mask is provided. The method for manufacturing an anti-bacterial and/or anti-viral face mask includes providing a body portion comprising at least one fibrous layer and depositing at least one coating over the at least one fibrous layer. The at least one coating comprises at least one material selected from the group consisting of TiO₂, ZnO, CuO, Mo, Ag, and combinations thereof.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
Figure 1 shows a front view of an anti-bacterial and/or anti-viral face mask 10 according to embodiments described herein;
Figure 2A show macroscopic and microscopic cross-sectional views of a body portion of an anti-bacterial and/or anti-viral face mask according to embodiments described herein;
Figures 2B to 2D show macroscopic cross-sectional views of a body portion of an anti-bacterial and/or anti-viral face mask according to embodiments described herein;
Figure 3 shows a schematic view of a deposition apparatus used for manufacturing an anti-bacterial and/or anti-viral face mask according to embodiments described herein; and
Figure 4 shows a flow chart of a method for manufacturing an anti-bacterial and/or anti-viral face mask according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

The need for effective personal protection from COVID-19 and/or any other virus or bacteria has become nowadays more relevant than ever. Face masks are most commonly used for this purpose in stores to protect retail workers from inhaling infectious droplets from customer sneezes and coughs and also to reduce or avoid spreading infections caused by air exhaled from the wearer. Similarly, face masks are also used, for instance, by many workers (e.g., medical, dental, veterinary) and the public in general.

Face masks protect a wearer's mouth and nose from inhaling dust and other harmful airborne contaminates such as microorganisms like bacteria and viruses, and also filter the air exhaled from the wearer, thus reducing the number of harmful organisms or other contaminants released into the environment.

While the above-mentioned face masks provide a great deal of personal protection, a problem related to the use of such face masks is that a wearer is still in contact with the face mask after filtering microorganisms such as bacteria and viruses. Therefore, a face mask has to be washed or disposed of after certain period of use, which makes face masks useful only during a specific period of time and increases the cost of using face masks to prevent the spread of COVID-19 through touch. Further, most of the effective and expensive face masks are only disposable face masks, since such face masks are made of materials being unsuitable for cleaning or washing processes. Consequently, the use of face masks has a high environmental impact due to the constant disposal of such face masks and the lack of the possibility of reutilization.

The present disclosure overcomes these drawbacks by providing a face mask having anti-bacterial and/or anti-viral properties and a method for manufacturing the anti-bacterial and/or anti-viral face mask. In particular, the present disclosure provides a face mask which deactivates microorganisms such as bacteria and viruses contacting the face mask, so that they are not inhaled by a wearer and so that the microorganisms are not transferred to another surface by inadvertent contact of the face mask with other surfaces or the hands. Further advantages of the anti-bacterial and/or anti-viral face mask are described in the present disclosure.

Before various embodiments of the present disclosure are described in more detail, some aspects with respect to some terms and expressions used herein are explained.

In the present disclosure, "face mask" may be understood as a personal protection device configured to cover at least a mouth of a wearer, particularly configured to cover at least a nose and a mouth of a wearer, and worn to prevent inhalation or spreading of any harmful airborne contaminants such as microorganisms like bacteria and viruses. Furthermore, the term "anti-bacterial" may be understood as a property to destroy or inhibit the growth of bacteria, particularly pathogenic bacteria. The term "anti-viral" may be understood as a property to destroy a virus or a property to suppress the ability of a virus to replicate and, hence, inhibit the capability of the virus to multiply and reproduce. The term "fastening unit" may be understood as any material configured to attached a face mask to a wearer's head and hold a face mask close to a wearer's head. Examples of fastening unit are ear loops, elastic bands configured to be wrapped around a wearer's head, hook and loop type fastener arrangements (e.g. VELCRO^{®} fasteners), or any other fastening unit. The term "body portion" may be understood as a section of a face mask configured to cover at least a mouth of a wearer, particularly at least a nose and a mouth of a wearer. The terms "deposit", "depositing", "deposited" and/or "deposition" may be understood as placing or setting down a material from a gaseous state to a solid state in a specific place.

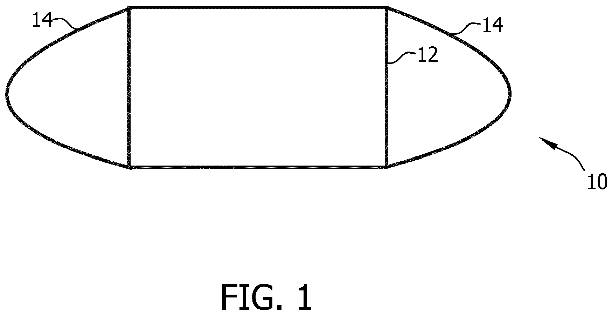

Figure 1 shows a front view of an anti-bacterial and/or anti-viral face mask 10 according to embodiments described herein. The anti-bacterial and/or anti-viral face mask 10 includes a body portion 12, particularly a body portion 12 and fastening unit 14. In some embodiments, the body portion 12 may include an inner surface and an outer surface. The inner surface can be configured to face and contact an anti-bacterial and/or anti-viral face mask's wearer. The outer surface can be opposite the inner surface.

Further, the body portion 12 includes at least one fibrous layer and at least one coating deposited over the at least one fibrous layer. In some embodiments, the at least one fibrous layer and/or the at least one coating deposited over the at least one fibrous layer can be porous. The porosity of the at least one fibrous layer and/or the at least one coating deposited over the at least one fibrous layer allows the passage of air and, therefore, a face mask's wearer can breathe through the face mask.

The at least one coating includes at least one material selected from the group consisting of TiO₂, ZnO, CuO, Mo, Ag, and combinations thereof. However, it is to be understood that the material of the at least one coating deposited over the at least one fibrous layer of the present disclosure is not limited to TiO₂, ZnO, CuO, Mo, Ag, and combinations thereof, and that any suitable materials having anti-bacterial and/or anti-viral properties and being suitable for deposition, particularly for chemical vapor deposition or physical vapor deposition, could be used in the at least one coating deposited over the at least one fibrous layer. Examples of physical vapor deposition can be electron-beam physical vapor deposition and sputter deposition. The at least one coating provides anti-bacterial and/or anti-viral properties to the anti-bacterial and/or anti-viral face mask 10 described in the present disclosure.

According to some embodiments, which can be combined with other embodiments described herein, the body portion 12 may include a plurality of folds. In some embodiments, the body portion 12 may further include a malleable member. The malleable member can be provided so that a section of the body portion is closely fit to the contours of a nose and upper cheeks of a wearer. In some embodiments, the malleable member may be a moldable or a malleable material selected from the group consisting of metal, alloy, plastic, and combinations thereof.

In some embodiments, the body portion 12 may have a shape selected from the group consisting of planar, conic, and pleated. In some embodiments, the body portion 12 may have a duckbill shape. As an example, Figure 1 shows an anti-bacterial and/or anti-viral face mask having a planar shape.

According to some embodiments, which can be combined with other embodiments described herein, the at least one coating may have a thickness of at maximum 100 nm, particularly a thickness of 20 nm at maximum, more particularly a thickness of 5 nm at maximum. The thickness of the at least one coating allows a decrease in the costs of production of the anti-bacterial and/or anti-viral face mask 10, since the amount of material of the at least one coating deposited on the at least one fibrous layer is reduced. Further, a lower environmental impact due to the lower demand of material for the at least one coating deposited on the at least one fibrous layer is obtained.

Although thicknesses and materials are mainly described for the at least one coating deposited over the at least one fibrous layer of the present disclosure, the thicknesses and materials also apply to any coating described in the present disclosure.

According to some embodiments, the at least one coating deposited over the at least one fibrous layer of the present embodiments can be constituted by a number of coatings formed (e.g., by deposition) one on top of another. In some embodiments, the at least one coating deposited over the at least one fibrous layer may include a first coating including a first coating material and a second coating comprising a second coating material. In some embodiments, the first coating material may include at least one material selected from the group consisting of TiO₂, ZnO, CuO, Mo, Ag, and combinations thereof.

In some embodiments, the second coating material may include at least one material selected from the group consisting of TiO₂, ZnO, CuO, Mo, Ag, and combinations thereof. In some embodiments, the first coating material may differ from the second coating material. As an example, the first coating material may include TiO₂ and the second coating material may include Ag or the first coating material may include Ag and the second coating material may include TiO₂.

According to further embodiments, the first coating and/or the first coating material may have anti-bacterial properties and/or anti-viral properties. In some embodiments, the second coating and/or the second coating material may have anti-bacterial properties and/or anti-viral properties. In some embodiments, the first coating and the second coating material together may have antibacterial and anti-viral properties. In some embodiments, the first coating can be deposited at least partially over the at least one fibrous layer. In some embodiments, the first coating may be in direct contact with the at least one fibrous layer.

According to further embodiments, the second coating may be deposited at least partially over the at least one fibrous layer. In some embodiments, the second coating may be in direct contact with the at least one fibrous layer. In some embodiments, the second coating can be deposited partially over the first coating, e.g., deposited over a part or section of the first coating. In some embodiments, the second coating can be deposited over 90% of a surface of the first coating at maximum, particularly over 80% of a surface of the first coating, more particularly over 70% of a surface of the first coating at maximum.

The deposition of the second coating partially over the first coating permits to maintain the anti-bacterial and/or anti-viral properties of the first coating, since the first coating is only partially covered with the second coating, e.g., parts or sections of the first coating are free of the second coating. Further, since the second coating is partially over the first coating, a lower amount of the second material coating is needed in relation to first material coating. Therefore, a lower environmental impact due to the lower demand of the second material coating deposited partially over the first coating is obtained.

As an example, when reference is made to the term "over", e.g., at least one coating deposited over the at least one fibrous layer, the first coating can be disposed at least partially over the at least one fibrous layer or the second coating can be deposited partially over the first coating, it is understood that, starting from the at least one fibrous layer, the first coating is deposited over the at least one fibrous layer and, thereafter, the second coating is deposited partially over the first coating. For instance, the second coating can be deposited over 90% of a surface of the first coating at maximum, particularly over 80% of a surface of the first coating, more particularly over 70% of a surface of the first coating at maximum.

In other words, the term "over" is used to define an order of fibrous layers and/or coatings, wherein the starting point is the at least one fibrous layer or a fibrous layer therein, which is irrespective of whether the body portion, the at least one fibrous layer or the at least one coating deposited over the at least one fibrous layer is depicted upside down or not.

According to some embodiments, which can be combined with other embodiments described herein, the body portion 12, particularly the at least one fibrous layer, may further include a microporous membrane. In some embodiments, the microporous membrane may include an expanded polytetrafluoroethylene membrane. In some embodiments, the microporous membrane can be an inner layer of the body portion 12, particularly an inner layer of the at least one fibrous layer. In some embodiments, the microporous membrane can be an outermost layer of the body portion 12, particularly an outermost layer of the at least one fibrous layer.

As used herein, "expanded" may be understood as sufficiently stretched beyond the elastic limit of the material to introduce permanent set or elongation to the fibrils. The expanded polytetrafluoroethylene membrane may be fully sintered, partially sintered or unsintered. As used herein, the term "sintered" may be understood as a change of a state of a PTFE material from crystalline to amorphous. Other suitable materials that may be used to form the microporous membrane include at least one material selected from the group consisting of polyolefin, polyamide, polyester, polysulfone, polyether, acrylic and methacrylic polymers, polystyrene, polyurethane, polypropylene, polyethylene, cellulosic polymer, and combinations thereof.

The microporous membrane offers an additional protection to a face mask's wearer by preventing the passage of airborne particulates, bacteria, and other germs, which become entrapped in the pores of the microporous membrane. As a result, the wearer is effectively protected from potentially harmful airborne particulates, while still being able to comfortably breathe when wearing the mask. Additionally, the microporous membrane protects the wearer from liquids, such as chemicals, that may be splashed on the face mask, for instance, if the surface tension of the liquid is greater than the surface energy of the expanded polytetrafluoroethylene membrane.

In some embodiments, the at least one fibrous layer may include at least one fibrous layer selected from the group consisting of a non-woven layer, a woven layer, and a knitted layer. In some embodiments, the at least one fibrous layer may include at least one non-woven layer, at least one woven layer, and/or at least one knitted layer. Although internal structural organization of the fibers and other material properties are mainly described for the at least one fibrous layer of the present disclosure, the internal structural organization of the fibers and other material properties described for the at least one fibrous layer may also apply to any fibrous layer described in the present disclosure. Properties of the individual fibrous layers of the at least one fibrous layer can be different.

In some embodiments, the non-woven layer or the at least one non-woven layer can be any of spun-bonded non-woven layer, heat sealing non-woven layer, spunlace non-woven layer, needle punched non-woven layer, hydrophilic non-woven layer, melt-blown non-woven layer, stitch-bonded non-woven layer, airlaid pulp non-woven layer or wet non-woven fabric.

According to some embodiments, the non-woven layer, the woven layer, the knitted layer, the at least one fibrous layer, the at least one non-woven layer, the at least one woven layer, and/or the at least one knitted layer can include at least one material selected from the group consisting of natural fibers (for instance, cotton, jute, flax or wool) and synthetic fibers (for instance, polyester (PES), polyolefines such as polypropylene (PP), polyamide or rayon). In some embodiments, each of the fibrous layers of the at least one fibrous layer may be made of the same material or of different materials. In some embodiments, the non-woven layer, the woven layer, the knitted layer, the at least one fibrous layer, the at least one non-woven layer, the at least one woven layer, and/or the at least one knitted layer may include propylene,

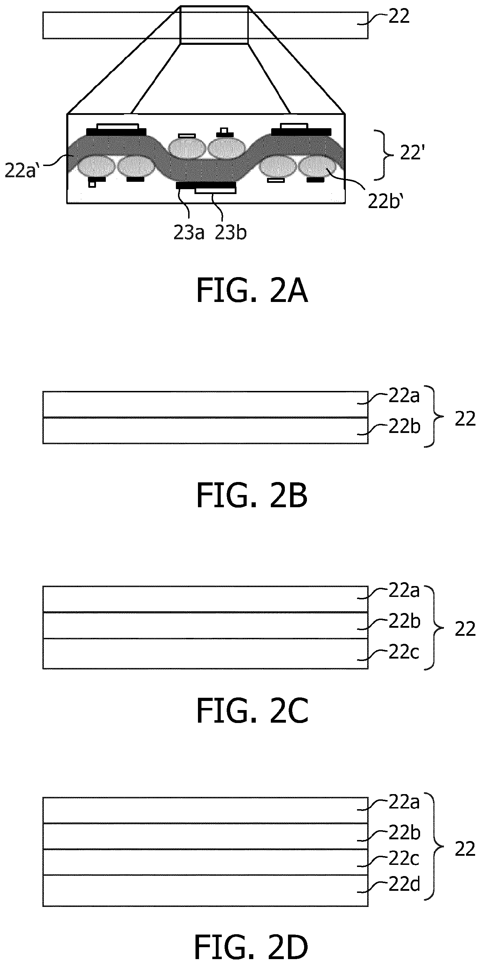

Figure 2A shows a macroscopic and a microscopic cross-sectional view of a body portion 22 of an anti-bacterial and/or anti-viral face mask according to embodiments described herein. As an example, in figure 2A, the body portion 22 includes a fibrous layer 22. In figure 2A, the fibrous layer 22' is a woven layer, particularly a woven layer including at least one warp yarn 22a' and a weft yarn 22b', as an example. However, the internal structural organization of the fibers of the fibrous layer 22' can be any of those described in the present disclosure. For instance, the fibrous layer 22' can be a non-woven layer or a knitted layer.

Moreover, the fibrous layer 22' includes at least one coating deposited over the fibrous layer 22'. The at least one fibrous layer and/or the at least one coating deposited over the at least one fibrous layer can be porous. As an example, the at least one coating deposited over the fibrous layer 22' may include a first coating and a second coating. For instance, in figure 2A the fibrous layer 22' includes a first coating 23a and a second coating 23b. In some embodiments, as shown in the figure, the first coating can be deposited at least partially over the fibrous layer 22. In some embodiments, as also shown in the figure, the second coating can be deposited at least partially over the fibrous layer 22. As exemplarily shown in figure 2A, the first coating 23a and the second coating 23b are deposited partially over the fibrous layer 22.

Furthermore, the second coating can be deposited partially over the first coating. As an example, in figure 2A the second coating 23b is deposited partially over the first coating 23a. For instance, the second coating 23b can be deposited over 90% of a surface of the first coating 23a at maximum, particularly over 80% of a surface of the first coating 23a, more particularly over 70% of a surface of the first coating 23a at maximum. Therefore, according to figure 2A, if the first coating has anti-bacterial properties and the second coating has anti-viral properties or vice versa, the fibrous layer 22' shows both anti-bacterial and/or anti-viral properties.

For the sake of simplicity, Figures 2B to 2D show macroscopic cross-sectional views of a body portion 22 of an anti-bacterial and/or anti-viral face mask according to embodiments described herein. However, a microscopic cross-sectional view of any fibrous layer of the at least one fibrous layer of the body portion 22 of an anti-bacterial and/or anti-viral face mask in any of Figures 2B to 2D is similar to that described above regarding figure 2A and in the present disclosure.

In figure 2B, the body portion 22, particularly the at least one fibrous layer of the body portion 22, may include a first fibrous layer 22a and a second fibrous layer 22b, as an example. In some embodiments, the first fibrous layer 22a and/or the second fibrous layer 22b may include at least one coating deposited over the first fibrous layer 22a and/or the second fibrous layer 22b. As an example, the at least one coating deposited over the first fibrous layer 22a and/or the second fibrous layer 22b may include a first coating and a second coating. In some embodiments, the first coating can be deposited at least partially over the first fibrous layer 22a and/or the second fibrous layer 22b. In some embodiments, the second coating is deposited at least partially over the second fibrous layer 22b of the at least one fibrous layer. According to some embodiments, which can be combined with other embodiments of the present dislosure, the first fibrous layer and the second fibrous layer of the at least one fibrous layer are outermost fibrous layers of the body portion.

In some embodiments, the second coating can be deposited partially over the first coating. For instance, the second coating can be deposited over 90% of a surface of the first coating at maximum, particularly over 80% of a surface of the first coating, more particularly over 70% of a surface of the first coating at maximum. In some embodiments, the properties such as internal structural organization of the fibers and materials of the first fibrous layer 22a as described in the present disclosure may differ from the properties of the second fibrous layer 22b. For instance, the first fibrous layer 22a can be a non-woven layer and the second fibrous layer 22b can be a woven layer.

Alternatively, as an example in figure 2B, the body portion 22, particularly the at least one fibrous layer of the body portion 22, may include a first fibrous layer 22a and a microporous membrane 22b. In some embodiments, the first fibrous layer 22a may include at least one coating deposited over the first fibrous layer 22a. As an example, the at least one coating deposited over the first fibrous layer 22a may include a first coating and a second coating. In some embodiments, the first coating can be deposited at least partially over the fibrous layer 22a. In some embodiments, the second coating can be deposited partially over the first coating. In figure 2A, the first fibrous layer 22a may be in direct contact with the second fibrous layer 22b or the microporous membrane 22b, as an example.

In figure 2C, the body portion 22, particularly the at least one fibrous layer of the body portion 22, may include a first fibrous layer 22a, a second fibrous layer 22b, and a third fibrous layer 22c, as an example. In some embodiments, the first fibrous layer 22a, the second fibrous layer 22b, and/or the third fibrous layer 22c may include at least one coating deposited over the first fibrous layer 22a, the second fibrous layer 22b, and/or the third fibrous layer 22c, respectively. As an example, the at least one coating deposited over the first fibrous layer 22a, the second fibrous layer 22b, and/or the third fibrous layer 22c may include a first coating and a second coating. In some embodiments, the first coating can be deposited at least partially over the first fibrous layer 22a, the second fibrous layer 22b, and/or the third fibrous layer 22c. In some embodiments, the second coating can be deposited partially over the first coating. For instance, the second coating can be deposited over 90% of a surface of the first coating at maximum, particularly over 80% of a surface of the first coating, more particularly over 70% of a surface of the first coating at maximum. Properties such as internal structural organization of the fibers and materials of each of the first fibrous layer 22a, the second fibrous layer 22b, and/or the third fibrous layer 22c may differ from each other. For instance, the first fibrous layer 22a can be a non-woven layer, the second fibrous layer 22b can be a woven layer, and the third fibrous layer 22c can be a non-woven layer.

Alternatively, as an example in figure 2C, the body portion 22, particularly the at least one fibrous layer of the body portion 22, may include a first fibrous layer 22a, a microporous membrane 22b, and a second fibrous layer 22c. In some embodiments, the microporous membrane 22b can be an expanded polytetrafluoroethylene membrane. In some embodiments, the microporous membrane 22b, particularly the expanded polytetrafluoroethylene membrane, can be an inner layer of the body portion 22, particularly an inner layer of the at least one fibrous layer. In some embodiments, the expanded polytetrafluoroethylene membrane can be an outermost layer of the body portion 22, particularly of the at least one fibrous layer of the body portion 22.

In some embodiments, at least one of the first fibrous layer 22a and the second fibrous layer 22c of the body portion 22, particularly of the at least one fibrous layer of the body portion 22, can be an outermost fibrous layer of the body portion 22, particularly of the at least one fibrous layer of the body portion 22. For instance, the first fibrous layer 22a and the second fibrous layer 22c of the body portion 22, particularly of the at least one fibrous layer of the body portion 22, can be outermost fibrous layers of the body portion, particularly of the at least one fibrous layer of the body portion 22. In some embodiments, at least one of the at least one fibrous layer of the body portion 22 can be an inner fibrous layer of the body portion, particularly of the at least one fibrous layer of the body portion 22. For instance, the first fibrous layer 22a or the second fibrous layer 22c can be an inner fibrous layer of the body portion, particularly of the at least one fibrous layer of the body portion 22.

In some embodiments, the first fibrous layer 22a and/ or the second fibrous layer 22c may include at least one coating deposited over the first fibrous layer 22a and/or the second fibrous layer 22c, respectively. As an example, the at least one coating deposited over the first fibrous layer 22a and/or the second fibrous layer 22c may include a first coating and a second coating. In some embodiments, the first coating can be deposited at least partially over the fibrous layer 22a and/or the second fibrous layer 22c.

Furthermore, the second coating can be deposited partially over the first coating. For instance, the second coating can be deposited over 90% of a surface of the first coating at maximum, particularly over 80% of a surface of the first coating, more particularly over 70% of a surface of the first coating at maximum. In figure 2C, the first fibrous layer 22a may be in direct contact with the microporous membrane 22b, as an example. In some embodiments, the second fibrous layer 22c may be in direct contact with the microporous membrane 22b.

In some embodiments, further fibrous layers can be present. As an example, further fibrous layers can be provided between the at least one fibrous layer of the body portion. As an example, in figure 2D, the body portion 22, particularly the at least one fibrous layer of the body portion 22, may include a first fibrous layer 22a, a second fibrous layer 22b, a third fibrous layer 22c, and a fourth fibrous layer 22d arranged in this order.

Alternatively, the body portion 22, particularly the at least one fibrous layer of the body portion 22, may include a first fibrous layer 22a, a second fibrous layer 22b, a third fibrous layer 22c, and a microporous membrane 22d arranged in this order or in any order. As a further alternative, the body portion 22, particularly the at least one fibrous layer of the body portion 22, may include a first fibrous layer 22a, a microporous membrane 22b, a second fibrous layer 22c, and a third fibrous layer 22d arranged in this order.

In some embodiments, the first fibrous layer 22a, the second fibrous layer 22b, the third fibrous layer 22c, and/ or the fourth fibrous layer 22d of the body portion 22, particularly the at least one fibrous layer of the body portion 22, may include at least one coating deposited over the first fibrous layer 22a, the second fibrous layer 22b, the third fibrous layer 22c, and/ or the fourth fibrous layer 22d, respectively. As an example, the at least one coating deposited over the first fibrous layer 22a, the second fibrous layer 22b, the third fibrous layer 22c, and/ or the fourth fibrous layer 22d may include a first coating and a second coating. In some embodiments, the first coating can be deposited at least partially over the fibrous layer 22a, the second fibrous layer 22b, the third fibrous layer 22c, and/ or the fourth fibrous layer 22d. Further, the second coating can be deposited partially over the first coating. For instance, the second coating can be deposited over 90% of a surface of the first coating at maximum, particularly over 80% of a surface of the first coating, more particularly over 70% of a surface of the first coating at maximum.

Methods for depositing at least one coating over at least one fibrous layer may include a physical vapor deposition (PVD) process, a chemical vapor deposition (CVD) process, a plasma enhanced chemical vapor deposition (PECVD) process, etc. As an example, the process is performed in a process apparatus or process chamber, where a substrate, e.g., a body portion including at least one fibrous layer is located. A deposition material is provided in the apparatus. Further, other processs like etching or the like can be conducted in processing chambers.Examples of physical vapor deposition can be electron-beam physical vapor deposition and sputter deposition. In particular, a sputter deposition allows depositing at least one coating over at least one fibrous layer without damaging the at least one fibrous layer and obtaining the at least one coating with the thickneses described in the present disclosure. Therefore, the sputter deposition allows a lower environmental impact due to the lower demand of material for the at least one coating deposited on the at least one fibrous layer.

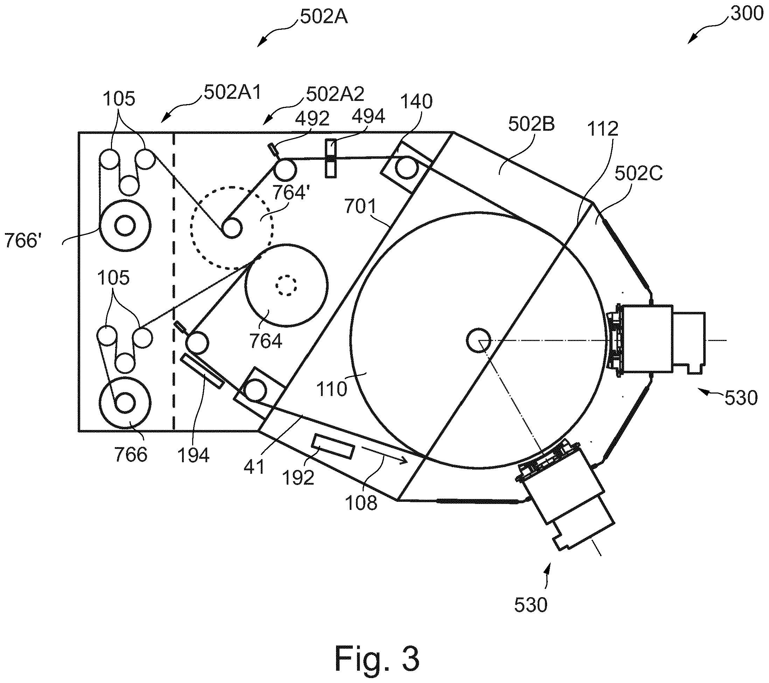

Figure 3 shows a schematic view of a deposition apparatus 300, e.g. a roll-to-roll deposition apparatus, used for manufacturing an anti-bacterial and/or anti-viral face mask according to embodiments described herein, and particularly for depositing at least one coating over the at least one fibrous layer according to embodiments described herein.

The apparatus 300 can include at least three chamber portions 502A, 502B and 502C. At chamber portion 502C, one or more deposition sources 530 can be provided as processing tools. A substrate 41, e.g. a body portion including at least one fibrous layer as described in the present disclosure, is provided on a first roll 764, e.g. having a winding shaft. The substrate 41 is unwound from the roll 764 as indicated by the substrate movement direction shown by arrow 108. A separation wall 701 is provided for separation of chamber portions 502A and 502B. The separation wall 701 can further be provided with gap sluices 140 for having the substrate 41 pass therethrough. A vacuum flange 112 provided between the chamber portions 502B and 502C can be provided with openings to take up at least some processing tools.

The substrate 41 is moved through the deposition areas provided at a coating drum 110 and corresponding to positions of the deposition sources 530. During operation, the coating drum 110 rotates around an axis such that the substrate 41 moves in the direction of arrow 108. According to some embodiments, the substrate 41 is guided via one, two or more rollers from the roll 764 to the coating drum 110 and from the coating drum 110 to the second roll 764', e.g. having a winding shaft, on which the substrate 41 is wound after processing thereof.

According to some embodiments, the deposition sources 530 can be configured for depositing the at least one coating over the at least one fibrous layer as described in embodiments of the present disclosure. As an example, one deposition source 530 can be adapted for deposition of a first coating over the at least one fibrous layer and another deposition source 530 can be adapted for deposition of second coating over the at least one fibrous layer. The material of the first coating may differ from the material of the second coating. Further, the second coating can be deposited partially over the first coating. For instance, the second coating can be deposited over 90% of a surface of the first coating at maximum, particularly over 80% of a surface of the first coating, more particularly over 70% of a surface of the first coating at maximum.

In some implementations, the first chamber portion 502A is separated in an interleaf chamber portion unit 502A1 and a substrate chamber portion unit 502A2. Further, interleaf rolls 766/766' and interleaf rollers 105 can be provided as a modular element of the apparatus 300. The apparatus 300 can further include a pre-heating unit 194 to heat the substrate 41. Further, additionally or alternatively a pre-treatment plasma source 192, e.g. an RF (radio frequency) plasma source can be provided to treat the substrate 41 with a plasma prior to entering chamber portion 502C.

According to yet further embodiments, which can be combined with other embodiments described herein, optionally also an optical measurement unit 494 for evaluating the result of the substrate processing and/or one or more ionization units 492 for adapting the charge on the substrate 41 can be provided.

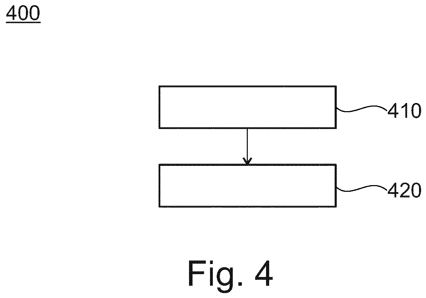

According to an aspect of the present disclosure and as shown in figure 4, a method 400 for manufacturing an anti-bacterial and/or anti-viral face mask is provided. The method includes providing a body portion comprising at least one fibrous layer (block 410). Further, the method includes depositing at least one coating over the at least one fibrous layer (block 420). The at least one coating comprises at least one material selected from the group consisting of TiO₂, ZnO, CuO, Mo, Ag, and combinations thereof. In some embodiments, the at least one coating may have a thickness of at maximum 100 nm, particularly a thickness of 20 nm at maximum, more particularly a thickness of 5 nm at maximum.

In some embodiments, depositing at least one coating over the at least one fibrous layer may include depositing by chemical vapor deposition or physical vapor deposition. Examples of physical vapor deposition can be electron-beam physical vapor deposition and sputter deposition. Such deposition techniques have a less environmental impact in comparison to any liquid coating technique, since the use of solvents and/or drying processes is omitted. In particular, a sputter deposition allows depositing at least one coating over at least one fibrous layer without damaging the at least one fibrous layer and obtaining the at least one coating with the thickneses described in the present disclosure. Therefore, the sputter deposition allows a lower environmental impact due to the lower demand of material for the at least one coating deposited on the at least one fibrous layer.

In some embodiments, depositing at least one coating over the at least one fibrous layer may include cooling the at least one fibrous layer using a coating drum while depositing at least one coating over the at least one fibrous layer. Accordingly, cooling the at least one fibrous layer improves the thermal stability of the at least one fibrous layer while depositing at least one coating over the at least one fibrous layer and, therefore, avoids any chemical and/or physical change in the at least one fibrous layer.

In some embodiments, depositing at least one coating over the at least one fibrous layer may include depositing a first coating including a first coating material and depositing a second coating including a second coating material. For instance, depositing at least one coating over the at least one fibrous layer may include depositing a first coating including TiO₂ by electron-beam physical vapor deposition or sputter deposition and depositing a second coating including Ag by electron-beam physical vapor deposition.

In some embodiments, depositing at least one coating over the at least one fibrous layer may include depositing the first coating at least partially over the at least one fibrous layer. In some embodiments, depositing at least one coating over the at least one fibrous layer may include depositing the second coating at least partially over the at least one fibrous layer. In some embodiments, depositing at least one coating over the at least one fibrous layer may include depositing the second coating partially over the first coating.

In some embodiments, depositing at least one coating over the at least one fibrous layer may include depositing the first coating and/or the second coating at least partially over a first fibrous layer and/or a second fibrous layer of the body portion, particularly over a first fibrous layer and/or a second fibrous layer of the at least one fibrous layer.

While the foregoing is directed to embodiments of the disclosure, other and further embodiments of the disclosure may be devised without departing from the basic scope thereof, and the scope thereof is determined by the claims that follow.

## Claims

1. Anti-bacterial and/or anti-viral face mask including a body portion, the body portion comprising:
at least one fibrous layer; and
at least one coating deposited over the at least one fibrous layer, wherein
the at least one coating comprises at least one material selected from the group consisting of TiO₂, ZnO, CuO, Mo, Ag, and combinations thereof.

2. Anti-bacterial and/or anti-viral face mask according to claim 1, wherein the at least one coating has a thickness of at maximum 20 nm, particularly a thickness of 10 nm at maximum, more particularly a thickness of 5 nm at maximum.

3. Anti-bacterial and/or anti-viral face mask of one of claims 1 and 2, wherein the at least one coating deposited over the at least one fibrous layer comprises a first coating including a first coating material and a second coating including a second coating material, and the first coating material differs from the second coating material.

4. Anti-bacterial and/or anti-viral face mask according to claim 3, wherein the first coating material comprises TiO₂ and the second coating material comprises Ag or the first coating material includes Ag and the second coating material includes TiO₂.

5. Anti-bacterial and/or anti-viral face mask of one of claims 3 and 4, wherein the first coating is deposited at least partially over the at least one fibrous layer.

6. Anti-bacterial and/or anti-viral face mask of one of claims 3 to 5, wherein the second coating is deposited partially over the first coating.

7. Anti-bacterial and/or anti-viral face mask of one of claims 3 to 6, wherein the second coating is deposited over 90% of the surface of the first coating at maximum, particularly over 80% of the surface of the first coating, more particularly over 70% of the surface of the first coating at maximum.

8. Anti-bacterial and/or anti-viral face mask of one of claims 3 to 5, wherein the at least one fibrous layer comprises a first fibrous layer and a second fibrous layer and the first coating is deposited at least partially over the first fibrous layer of the at least one fibrous layer and the second coating is deposited at least partially over the second fibrous layer of the at least one fibrous layer.

9. Anti-bacterial and/or anti-viral face mask of claim 8, wherein the first fibrous layer and the second fibrous layer of the at least one fibrous layer are outermost fibrous layers of the body portion.

10. Anti-bacterial and/or anti-viral face mask of one of claims 1 to 9, wherein the body portion further comprises a microporous membrane.

11. Anti-bacterial and/or anti-viral face mask according to claim 10, wherein the microporous membrane comprises an expanded polytetrafluoroethylene membrane, particularly the expanded polytetrafluoroethylene membrane is an inner layer of the body portion.

12. Anti-bacterial and/or anti-viral face mask of one of claims 1 to 11, wherein the at least one fibrous layer and/or the at least one coating deposited over the at least one fibrous layer are porous.

13. Method for manufacturing an anti-bacterial and/or anti-viral face mask, comprising:
providing a body portion comprising at least one fibrous layer,
depositing at least one coating over the at least one fibrous layer, wherein the at least one coating comprises at least one material selected from the group consisting of TiO₂, ZnO, CuO, Mo, Ag, and combinations thereof.

14. Method for manufacturing an anti-bacterial and/or anti-viral face mask of claim 13, wherein the at least one coating has a thickness of at maximum 100 nm, particularly a thickness of 20 nm at maximum, more particularly a thickness of 5 nm at maximum.

15. Method for manufacturing an anti-bacterial and/or anti-viral face mask of claim 14, wherein depositing at least one coating over the at least one fibrous layer comprises depositing by chemical vapor deposition or physical vapor deposition.
